# EUROPÄISCHE PATENTSCHRIFT

(11) **EP 1 736 754 B1**
(45) Veröffentlichungstag und Bekanntmachung des Hinweises auf die Patenterteilung: **10.09.2008**
(21) Anmeldenummer: 06009935.5
(22) Anmeldetag: 15.05.2006
(51) Int. Cl.: G01N 21/35

(54) **Optisches Analysegerät**
Optical analyser
Appareil d'analyse optique

(30) Priorität: 23.06.2005 DE 102005029601; 06.07.2005 DE 102005031857
(43) Veröffentlichungstag der Anmeldung: 27.12.2006
(73) Patentinhaber: GFG Gesellschaft für Gerätebau mbH, 44143 Dortmund (DE)
(72) Erfinder: Hübner, Hans-Jörg, 44141 Dortmund (DE); Krage, Rainer, 58313 Herdecke (DE)
(74) Vertreter: Gesthuysen, von Rohr & Eggert

(56) Entgegenhaltungen:
- EP-A- 0 768 521
- EP-A- 0 825 430
- DE-C1- 19 713 928
- US-A- 6 067 840
- US-B1- 6 469 303
- US-B1- 6 762 410
- US-B1- 6 843 102

## Beschreibung

Die Erfindung betrifft ein optisches Analysegerät nach dem Prinzip der Strahlungsabsorption mit einem Gehäuse mit mindestens einem strahlungsdurchlässigen Gehäuseelement, mit mindestens einer ersten Strahlungsquelle und einem ihr zugeordneten ersten Reflektor und einer zweiten Strahlungsquelle und einem ihr zugeordneten zweiten Reflektor, mit mindestens einem ersten Detektor und einem zweiten Detektor sowie mit einem außerhalb des Gehäuses angeordneten externen Reflektor, wobei die Strahlungsquellen und die Detektoren innerhalb des Gehäuses angeordnet sind, von dem externen Reflektor und dem strahlungsdurchlässigen Gehäuseelement ein Absorptionsraum gebildet wird, ein von der ersten Strahlungsquelle und dem ersten Reflektor emittierter Meßstrahl nach Reflexion an dem externen Reflektor wieder in das Gehäuse eintritt, von der zweiten Strahlungsquelle und dem zweiten Reflektor ein Referenzstrahl emittiert wird und der Referenzstrahl von der zweiten Strahlungsquelle und dem zweiten Reflektor auf den ersten Detektor und den zweiten Detektor fällt.

Optische Analysegeräte der hier in Rede stehenden Art sind in verschiedenen Ausführungsformen seit längerem bekannt und machen sich den Effekt der Strahlungsabsorption von Materie zu Nutzen, die von elektromagnetischer Strahlung durchdrungen wird. Die elektromagnetische Strahlung ist dabei zumeist breitbandig und sie deckt zumindest den Frequenzbereich ab, in dem ein zu detektierender Stoff strahlungsabsorbierend wirkt. Jeder zu erkennende Stoff zeigt dabei ein charakteristisches Absorptionsspektrum, das sich dadurch auszeichnet, daß die emittierte elektromagnetische Strahlung nach Durchlaufen des Absorptionsraumes, in dem sich der zu erkennende Stoff befindet, in bestimmten, zumeist engbandigen Absorptionsbereichen gegenüber der Strahlungsleistung benachbarter Frequenzbereiche relativ stark geschwächt ist. Während über die Aufnahme eines Absorptionsspektrums vorhandene Stoffe identifiziert werden können, ist es über die Intensität der relativen Abschwächung im Absorptionsbereich möglich, auch Aussagen über bestimmte Stoffkonzentrationen zu treffen.

Insbesondere bei der Detektion von Gasen findet die nichtdispersive Infrarotanalyse Verwendung, die ohne spektrale Zerlegung der emittierten elektromagnetischen Strahlung auskommt. Bei nichtdispersiven Spektrometern wird mit selektiven Detektoren gearbeitet, die nur in einem begrenzten Strahlungsbereich sensitiv sind, nämlich in dem Bereich, in dem der zu erkennende Stoff strahlungsabsorbierend ist. Die Selektivität der verwendeten Filter wird dabei häufig durch den Detektoren vorgeschaltete Interferenzfilter bewirkt. Als Detektoren werden meist pyroelektrische Detektoren oder zu Thermosäulen zusammengeschaltete Thermoelemente verwendet.

Es ist leicht vorstellbar, daß bei Verwendung nur eines Detektors praktisch keine Aussage über die tatsächliche Konzentration eines zu detektierenden Stoffes getroffen werden kann, wenn nicht auszuschließen ist, daß eine Schwächung des Meßstrahls nicht auch anderweitig verursacht werden kann, beispielsweise durch Anwesenheit von Störgasen und anderen Verschmutzungen im Absorptionsraum. Im gleichen Maße läßt sich beispielsweise auch eine alterungsbedingte Intensitätsschwankung der Strahlungsquelle mit lediglich einem Detektor nicht erkennen. Zur Kompensation der vorgenannten Effekte ist es deshalb im Stand der Technik bekannt, zumindest zwei Detektoren zu verwenden, von denen ein Detektor im Absorptionsbereich des zu detektierenden Stoffes empfindlich ist und der andere Detektor in einem Frequenzbereich empfindlich ist, in dem keine Absorption durch andere Stoffe möglich ist (Referenz-Detektor und Meß-Detektor). Indem das von dem Meß-Detektor gewonnene Signal auf das von dem Referenz-Detektor gewonnene Signal bezogen wird, lassen sich bestimmte, die Messung verfälschende Effekte kompensieren.

Es ist beispielsweise bekannt, die von einer Strahlungsquelle emittierte Strahlung durch Spiegel in einen Meßstrahl und einen Referenzstrahl aufzuteilen, wobei Meßstrahl und Referenzstrahl von zwei verschiedenen Detektoren erfaßt werden. Durch den Einsatz nur einer Strahlungsquelle ist beispielsweise die Empfindlichkeitsdrift einzelner Detektoren - beispielsweise verursacht durch Alterung oder Temperaturabhängigkeit - nicht kompensierbar und wirkt sich somit auf das endgültige Meßsignal aus (DE 44 37 188 C2).

Aus der DE 197 13 928 C1 ist ein optisches Analysegerät der in Rede stehenden Art bekannt, bei dem in dem Gehäuse ein Strahlteiler vorgesehen ist, der den Meßstrahl nach Durchlaufen des Absorptionsraunaes und den Referenzstrahl teilweise in Richtung des ersten Detektors und des zweiten Detektors umlenkt bzw. durchläßt. Zwischen den Strahlteiler und den ersten Detektor bzw. den zweiten Detektor sind jeweils ein Konzentrator geschaltet, die der Homogenisierung des Meß- bzw. Referenzstrahls dienen. Nachteilig an dieser Konstruktion ist einerseits, daß durch den Strahlteiler temperaturabhängige unsymmetrische Intensitätsverteilungen bzw. Intensitätsverluste beim Meß- bzw. Referenzstrahl bewirkt werden können, die nicht kompensierbar in das Meßsignal eingehen. Ferner wird durch den Einsatz von Konzentratoren zwangsläufig der Einfallwinkel des Meß- bzw. Referenzstrahls auf den jeweiligen nachgelagerten Detektor bzw. auf den dem Detektor vorgelagerten Interferenzfilter verkleinert, wodurch deren Bandpaßcharakteristik breitbandiger und damit weniger gasspezifisch wird. Durch die Vielzahl von Reflektionen werden darüber hinaus sowohl Meß- wie auch Referenzstrahl erheblich gedämpft, was sich negativ auf die Empfindlichkeit des optischen Analysegeräts auswirkt.

Ein grundlegendes Problem bei der Verwendung von optischen Analysegeräten der hier in Rede stehenden Art besteht darin, daß die spektrale Absorptionsfähigkeit von Stoffen in ihrem Absorptionsbereich sehr unterschiedlich ist. Einige Gase absorbieren lediglich sehr schwach und nur in einem sehr schmalen Wellenlängenbereich. Um eine gute Nachweisempfindlichkeit zu erzielen, ist für nur schwach absorbierende Komponenten im Vergleich zu stärker absorbierenden Komponenten eine längere Absorptionsstrecke notwendig, um vergleichbare Signale bei gleicher Stoffkonzentration zu erhalten. Eine einfache Anpassung der bekannten optischen Analysegeräte an unterschiedlich stark absorbierende Stoffe bzw, an unterschiedliche Empfindlichkeitsbereiche ist bei den Analysegeräten, von denen die Erfindung ausgeht, nicht ohne weiteres möglich.

Der Lehre der vorliegenden Erfindung liegt daher das Problem und die Aufgabe zugrunde, ein auf dem Prinzip der Strahlungsabsorption basierendes optisches Analysegerät so auszugestalten und weiterzubilden, daß die oben genannten Nachteile - zumindest teilweise - vermieden werden.

Das erfindungsgemäße optische Analysegerät, bei dem die zuvor hergeleitete und aufgezeigte Aufgabe gelöst ist, ist zunächst und im wesentlichen dadurch gekennzeichnet, daß der Meßstrahl nach Durchlaufen des Absorptionsraumes von einem in dem Gehäuse angeordneten Meßstrahlreflektor direkt auf den ersten Detektor und den zweiten Detektor gelenkt wird und der Referenzstrahl von der zweiten Strahlungsquelle und dem zweiten Reflektor direkt auf den ersten Detektor und den zweiten Detektor fällt. Durch die besondere Ausgestaltung des erfindungsgemäßen Analysegeräts kann auf die Verwendung eines Strahlteilers innerhalb des Gehäuses verzichtet werden, was die Konstruktion insgesamt einfacher und kostengünstiger macht und außerdem temperaturabhängige unsymmetrische Intensitätsverluste durch einen Strahlteiler vermeidet.

Im übrigen offenbart die EP 0 825 430 A ein Gasüberwachungsgerät mit zwei Detektoren, wobei durch die Verwendung von ellipsoidal reflektierenden Oberflächen im Gehäuse Meß- und Referenzstrahlen die gleichen optischen Wege haben. Aus der US 6,469,303 B1 ist ein NDIR-Sensor bekannt, bei dem aus einer Strahlungsquelle Meßstrahlen emittiert werden, die von zwei zylindrischen Spiegeln auf zwei Detektoren gelenkt werden. Schließlich offenbart die US 6,843,102 B1 eine Meßvorrichtung für Konzentrationsmessung von Gasen mit zwei Strahlungsquellen, wobei auch mindestens zwei Detektoren im Gehäuse dieser Meßvorrichtung vorhanden sind.

Es gibt nun eine Vielzahl von Möglichkeiten, die Lehre der Erfindung auszugestalten und weiterzubilden, wozu auf die Unteransprüche verwiesen wird. Zu besonderen Ausgestaltungen der Erfindung sind folgende Bemerkungen angezeigt.

In einem bevorzugten Ausführungsbeispiel des erfindungsgemäßen optischen Analysegeräts ist der Meßstrahlxeflektor ringförmig ausgebildet, wobei bestimmte Bereiche des Meßstrahlreflektors bestimmte Anteile des Meßstrahls auf bestimmte Detektoren reflektiert. Es ist also möglich, daß der von einem ersten Bereich des Meßstrahlreflektors reflektierte Teil des Meßstrahls nur einen Beitrag zur Bestrahlung des ersten Detektors liefert und ein anderer Bereich des Meßstrahlreflektors einen anderen Teil des Meßstrahls ausschließlich auf den zweiten Detektor umlenkt.

In einem weiteren bevorzugten Ausführungsbeispiel ist die Oberfläche des Meßstrahlreflektors strahlmischend und strahlhomogenisierend ausgebildet, so daß im wesentlichen von jedem Bereich des Meßstrahlreflektors reflektierte Meßstrahlen auf die vorhandenen Detektoren gelenkt und verteilt werden. Dies hat den besonders vorteilhaften Effekt, daß auch ohne ein zusätzliches optisch wirksames Element (Konzentrator, Diffuser) eine Durchmischung der verschiedenen Anteile des Meßstrahls bewirkt wird. Lokale Störungen des Meßstrahles wirken infolge dessen nicht nur auf einen Detektor sondern auf alle Detektoren, so daß unsymmetrische Beeinflussungen des Meßstrahls herausgemittelt werden können. In einem besonders bevorzugten Ausführungsbeispiel wird die strahlmischende und -homogenisierende Wirkung durch eine konkave und/oder konvexe Mikrostrukturierung der Oberfläche bewirkt.

In einem weiteren besonders bevorzugten Ausführungsbeispiel des erfindungsgemäßen optischen Analysegeräts ist der Abstand des externen Reflektors von dem Gehäuse einstellbar. Durch diese Maßnahme kann der Absorptionsraum in der Weise vergrößert werden, daß die in dem Absorptionsraum von dem Meßstrahl zurückzulegende Distanz erhöht wird. Dadurch ist es sehr einfach möglich, das erfindungsgemäße Analysegerät an unterschiedlich stark absorbierende Stoffe anzupassen, so daß ein Betrieb des optischen Analysegeräts in einem optimalen Empfindlichkeitsbereich möglich ist. Bei einem weiteren bevorzugten Ausfiihrungsbeispiel des Analysegeräts ist vorgesehen, daß der Strahlengang des Meßstrahls einstellbar ist. Damit ist gemeint, daß die Bündelung bzw. Aufweitung des Meßstrahls variiert werden kann, so daß die Ausleuchtung der Detektoren beeinflußbar ist. Insbesondere vorteilhaft - jedoch nicht notwendig - ist das Merkmal der Einstellbarkeit des Meßstrahls im Zusammenhang mit der Abstands-Einstellbarkeit des externen Reflektors von dem Gehäuse. Durch das aufeinander abgestimmte Zusammenwirken beider Einstellmöglichkeiten kann der möglicherweise zu weiten Auffächerung des Meßstrahls bei Vergrößerung des Abstandes des externen Reflektors von dem Gehäuse durch stärkere Bündelung des Meßstrahls entgegengewirkt werden und umgekehrt. In einem besonders bevorzugten Ausfiihrungsbeispiel wird die Einstellbarkeit des Strahlengangs des Meßstrahls durch Verschieben der ersten Strahlungsquelle gegenüber dem ersten Reflektor bewirkt. Durch Verschieben der ersten Strahlungsquelle entlang der optischen Achse des ersten Reflektors ― insbesondere aus dem Brennpunkt des Reflektors heraus ― wird eine zur optischen Achse symmetrische Auffächerung des Meßstrahls erzielt, vorausgesetzt, daß der Reflektor selbst symmetrisch ausgestaltet ist. Durch Verstellen der ersten Strahlungsquelle aus der optischen Achse heraus läßt sich auch eine Neigung des Meßstrahls gegenüber der optischen Achse des Reflektors realisieren.

Im einzelnen gibt es nun verschiedene Möglichkeiten, das erfindungsgemäße optische Analysegerät auszugestalten und weiterzubilden. Dazu wird verwiesen auf die dem Patentanspruch 1 nachgeordneten Patentansprüche und auf die Beschreibung bevorzugter Ausfiihrungsbeispiele in Verbindung mit der Zeichnung. In der Zeichnung zeigen
- Fig. 1: die Schnittdarstellung eines bevorzugten Ausführungsbeispiels des erfindungsgemäßen optischen Analysegeräts,
- Fig. 2: die Schnittdarstellung eines weiteren bevorzugten Ausfiihrungsbeispiels des erfindungsgemäßen optischen Analysegeräts und
- Fig. 3: die mit den bevorzugten Ausführungsbeispielen des erfindungsgemäßen Analysegeräts erzeugbaren Strahlengänge des Meßstrahls.

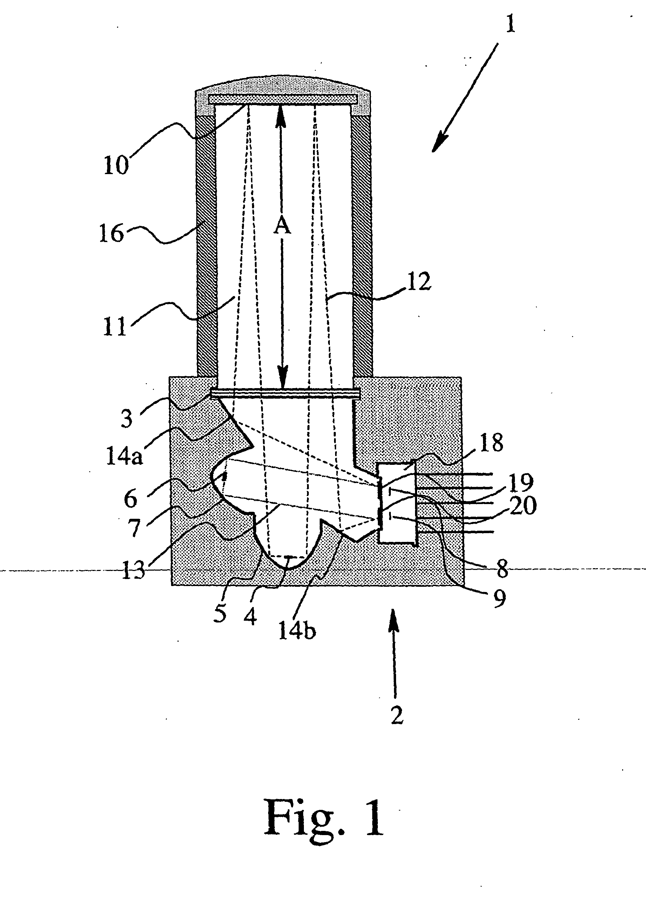

Fig. 1 zeigt ein bevorzugtes Ausführungsbeispiel eines erfindungsgemäßen optischen Analysegeräts 1, das ein gasdichtes Gehäuse 2 mit einem strahlungsdurchlässigen Gehäuseelement 3 aufweist. Das strahlungsdurchlässige Gehäuseelement 3 ist für die von einer ersten Strahlungsquelle emittierte Strahlung im wesentlichen durchlässig, so daß die von der ersten Strahlungsquelle 4 emittierte Strahlung das Gehäuse 2 einseitig verlassen kann. Der ersten Strahlungsquelle 4 ist ein erster Reflektor 5 zugeordnet, der in dem in Fig. 1 dargestellten Ausführungsbeispiel parabolisch ausgeformt ist, so daß durch ihn eine gewisse Bündelung der von der ersten Strahlungsquelle 4 emittierten Strahlung möglich ist. In dem gasdichten Gehäuse 2 ist ferner eine zweite Strahlungsquelle 6 mit einem ihr zugeordneten zweiten Reflektor 7 vorgesehen. In dem Gehäuse 2 sind weiterhin ein erster Detektor 8 und ein zweiter Detektor 9 angeordnet, die für die von der ersten Strahlungsquelle 4 bzw. der zweiten Strahlungsquelle 6 emittierten Strahlung empfindlich sind. Im konkreten Fall des in Fig. 1 dargestellten Ausführungsbeispiels handelt es sich bei dem ersten Detektor 8 und dem zweiten Detektor 9 jeweils um einen pyroelektrischen Detektor, der für den Infrarotbereich elektromagnetischer Strahlung sensitiv ist. Bei dem dargestellten optischen Analysegerät handelt es sich demnach um einen nichtdispersiven Infrarotanalysator (NDIR).

Beabstandet von dem gasdichten Gehäuse 2 bzw. dem strahlungsdurchlässigen Gehäuseelement 3 ist ein externer Reflektor 10 vorgesehen, der die von der ersten Strahlungsquelle 4 emittierte Strahlung so reflektiert, daß sie durch das strahlungsdurchlässige Gehäuseelement 3 wieder in das gasdichte Gehäuse 2 zurückgespiegelt wird. Bei dem externen Reflektor 10 handelt es sich im Ausführungsbeispiel nach Fig. 1 um einen Planspiegel. Von dem externen Reflektor 10 und dem strahlungsdurchlässigen Gehäuseelement 3 wird ― zumindest teilweise ― ein Absorptionsraum 11 umschlossen. In den Absorptionsraum 11 werden gasförmige, flüssige oder auch feste Stoffproben gebracht, die auf das Vorhandensein und die Konzentration bestimmter Stoffbestandteile hin überprüft werden sollen. Das in Fig. 1 dargestellte Analysegerät 1 wird zur spektrometischen Untersuchung von gasförmigen Proben verwendet. Grundsätzlich ist die Erfindung jedoch keineswegs auf die Detektion gasförmiger Stoffe beschränkt.

Von der ersten Strahlungsquelle 4 wird durch Zusammenwirken mit dem ersten Reflektor 5 ein gerichteter Meßstrahl 12 emittiert, der den Gehäuseinnenraum durch das strahlungsdurchlässige Gehäuseelement 3 verläßt und von dem externen Reflektor 10 in das gasdichte Gehäuse 2 durch das strahlungsdurchlässige Gehäuseelement 3 zurückgespiegelt wird. Der Meßstrahl 12 durchquert den Absorptionsraum 11 folglich zweimal. Von der zweiten Strahlungsquelle 6 wird in Zusammenwirkung mit dem zweiten Reflektor 7 ein Referenzstrahl 13 emittiert, der das gasdichte Gehäuse 2 jedoch nicht verläßt.

Erfindungsgemäß ist vorgesehen, daß der von dem Absorptionsraum 11 durch das strahlungsdurchlässige Gehäuseelement 3 in das gasdichte Gehäuse 2 zurückkehrende Meßstrahl 12 von einem in dem Gehäuse 2 angeordneten Meßstrahlreflektor 14a, 14b direkt auf den ersten Detektor 8 und den zweiten Detektor 9 gelenkt wird und daß der Referenzstrahl 13 von der zweiten Strahlungsquelle 6 und dem zweiten Reflektor 7 ebenfalls direkt auf den ersten Detektor 8 und den zweiten Detektor 9 fällt. Wesentlich ist dabei, daß der Meßstrahl 12 nach einmaliger Reflexion am Meßstrahlreflektor 14a, 14b und der Referenzstrahl 13 nach einmaliger Reflexion am zweiten Reflektor 7 direkt ― also ohne Zwischenschaltung weiterer optisch wirksamer Elemente ― auf die Detektoren 8, 9 fallen. Durch diese außerordentlich einfache Konstruktion werden insbesondere Nachteile vermieden, die sich aus der Verwendung zusätzlicher optischer Elemente wie beispielsweise Strahlenteilern ergeben, durch die sich zusätzliche Intensitätsverluste und temperaturabhängige unsymmetrische Intensitätsverteilungen des Meßstrahls 12 und des Referenzstrahls 13 ergeben können.

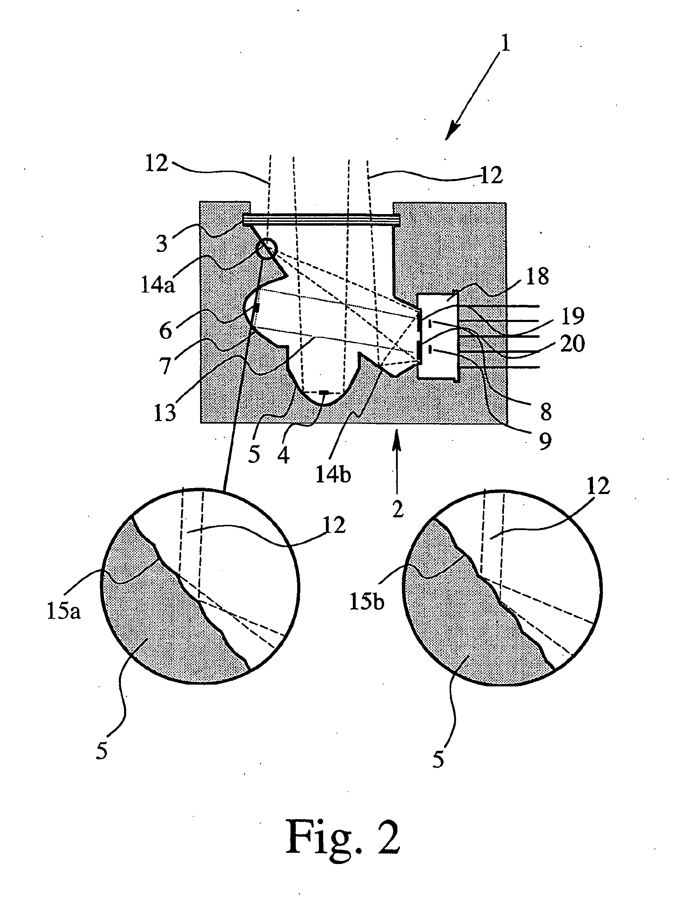

In dem bevorzugten, in Fig. 1 dargestellten Ausführungsbeispiel ist der Meßstrahlreflektor 14a, 14b ringförmig ausgestaltet, wobei in der Schnittdarstellung gemäß Fig. 1 nur die obere Schnittkante und die untere Schnittkante zu sehen ist. Der ringförmige Meßstrahlreflektor 14a, 14b ist in dem dargestellten Ausführungsbeispiel als Segment eines Paraboloids ausgestaltet, derart, daß die auf verschiedene Bereiche des Meßstrahlreflektors 14a, 14b fallenden Bestandteile des Meßstrahls 12 in Richtung auf die Detektoren 8, 9 reflektiert werden. Eine hinreichend glatte Oberfläche des Meßstrahlreflektors 14a, 14b bewirkt, daß die von einem ersten Bereich des Meßstrahlreflektors 14a, 14b reflektierten Anteile des Meßstrahls 12 im wesentlichen zu dem ersten Detektor 8 und die auf einen anderen Bereich des Meßstrahlreflektors 14a, 14b fallenden Anteile des Meßstrahls 12 auf den zweiten Detektor 9 reflektiert werden. Dies ist nachteilig, wenn verschiedene Bereiche des Meßstrahls 12 unterschiedlich stark beeinflußt werden, sei es durch unterschiedlich starke Probenkonzentrationen oder durch unsymmetrische Verschmutzungen der optischen Flächen im Absorptionsraum 11. Derartige Einflüsse sind auch nicht durch die Verwendung eines Referenzstrahles 13 kompensierbar. Dem Problem kann jedoch mit dem bevorzugten Ausführungsbeispiel der Ausgestaltung des Meßstrahlreflektors 14a, 14b gemäß Fig. 2 entgegengewirkt werden. In den Ausschnittsvergrößerungen gemäß Fig. 2 ist zu erkennen, daß die Oberfläche des Meßstrahlreflektors 14a, 14b eine konkave Mikrostrukturierung 15a (Detaildarstellung links) bzw. eine konvexe Mikrostrukturierung 15b (Detaildarstellung rechts) aufweist. Die Mikrostrukturierungen 15a, 15b des Meßstrahlreflektors 14 ist so ausgestaltet, daß der Meßstrahlreflektor 14a, 14b strahlmischend und strahlhomogenisierend auf den reflektierten Meßstrahl 12 wirkt. Die Strahlmischung erfolgt dabei nicht beliebig sondern so, daß die von einem bestimmten Bereich des Meßstrahlreflektors 14a, 14b reflektierten Teile des Meßstrahls 12 im wesentlichen auf alle Detektoren 8, 9 aufgeweitet werden, jedoch nicht darüber hinaus. Dadurch ist gewährleistet, daß bei einer räumlich ungleichmäßigen Beeinflussung des Meßstrahls 12 sich die daraus resultierende ebenfalls inhomogene Intensitätsverteilung nicht nur fehlerverursachend auf einen der Detektoren 8, 9 auswirkt, sondern der Fehler sich im wesentlichen auf beide Detektoren 8, 9 gleichermaßen auswirkt und damit in bekannter Weise kompensiert werden kann.

Bei dem in Fig. 1 dargestellten bevorzugten Ausführungsbeispiel ist der Abstand A des externen Reflektors 10 von dem Gehäuse 2 bzw. von dem strahlungsdurchlässigen Gehäuseelement 3 einstellbar. In dem Ausführungsbeispiel gemäß Fig. 1 können unterschiedliche Abstände A durch den Austausch von Abstandshaltern 16 bewirkt werden, durch der interessierende Abstand A festgelegt ist. Dadurch, daß die in Ausbreitungsrichtung des Meßstrahls 12 gerichtete Erstreckung des Absorptionsraums 11 variabel ist, kann das optische Analysegerät 1 an unterschiedlich stark absorbierende Stoffe angepaßt werden, und es ist daher möglich, das Analysegerät 1 in optimaler Weise beispielsweise an den Meßbereich der Detektoren 8, 9 anzupassen.

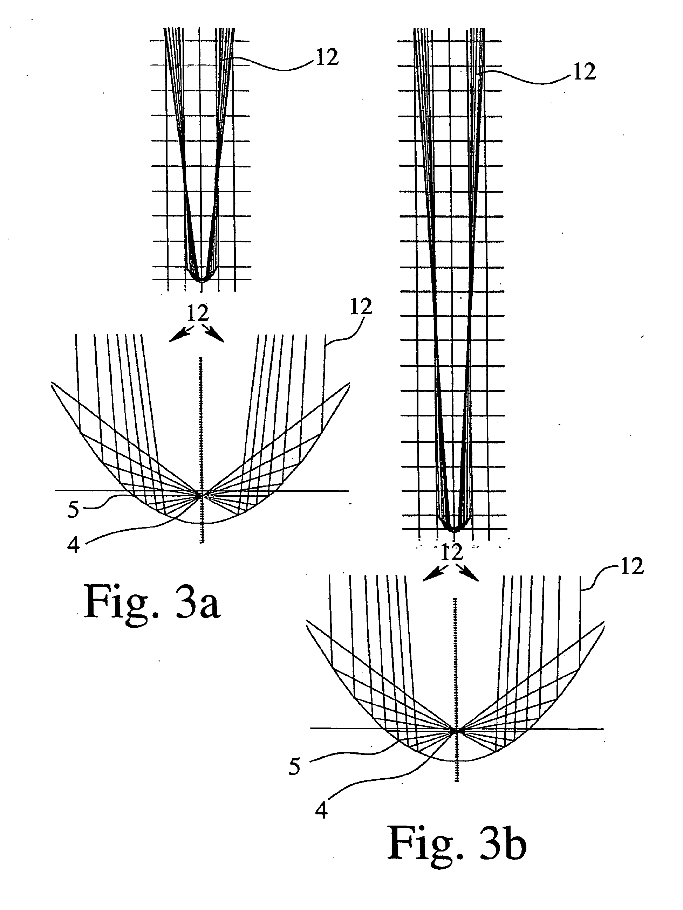

Bei dem optischen Analysegerät 1 gemäß Fig. 1 ist der Strahlengang des Meßstrahls einstellbar, wodurch sich die Ausleuchtung der Detektoren 8, 9 beeinflussen läßt. Bei dem in Fig. 1 dargestellten Analysegerät erfolgt die Einstellung des Strahlengangs des Meßstrahls 12 - hier im Detail nicht dargestellt - durch Verschieben der ersten Strahlungsquelle 4 gegenüber dem ersten Reflektor 5. In den Fig. 3a und 3b ist die Auswirkung der Verschiebung der ersten Strahlungsquelle 4 gegenüber dem ersten Reflektor 5 dargestellt, wobei die Verschiebung hier auf eine Bewegung der ersten Strahlungsquelle 4 entlang der optischen Achse des ersten Reflektors 5 beschränkt ist. Die Fig. 3a und 3b bestehen jeweils aus einer Detailansicht, die die Lage der ersten Strahlungsquelle 4 gegenüber dem ersten Reflektor 5 dokumentiert, und aus einer Darstellung des resultierenden, entfaltet dargestellten vollständigen Strahlengangs des Meßstrahls 12. Wenn die erste Strahlungsquelle dargestellt in der Fig. 3a, aus der Fokallage heraus in Richtung auf den ersten Reflektor 5 bewegt wird, resultiert eine Aufweitung des Strahlengangs des Meßstrahls 12; eine solche Einstellung würde verwendet werden bei vergleichsweise geringen Abständen A des externen Reflektors 10 von dem Gehäuse 2. Im Vergleich dazu befindet sich in Fig. 3b die erste Strahlungsquelle 4 recht nahe der Fokuslage des ersten Reflektors 5 und ist nur geringfügig in Richtung auf den ersten Reflektor 5 ausgelenkt. Durch diese Einstellung wird der Strahlengang des Meßstrahls 12 weniger aufgespreizt, mit dem Ergebnis, daß ein - im Vergleich zu Fig. 3a - deutlich längerer Meßweg überbrückt werden kann, bis die gleiche Aufweitung am Ende des dargestellten Strahlengangs erreicht wird. Die Einstellung des Strahlengangs des Meßstrahls 12 gemäß Fig. 3b würde demzufolge dann gewählt werden, wenn der Abstand A des externen Reflektors 10 von dem Gehäuse 2 groß ist.

Bei dem erfindungsgemäßen Analysegerät kann der Absorptionsraum zu den Seiten hin offen, so daß zu untersuchende Stoffe freibeweglich in den Absorptionsraum 11 eintreten und ihn wieder verlassen können. In dem bevorzugten Ausführungsbeispiel eines optischen Analysegeräts 1, das in Fig. 1 dargestellt ist, ist der Absorptionsraum 11 durch einen ringsum geschlossenen Abstandshalter 16 von der Umgebung abgeschlossen und damit als geschlossene Meßküvette ausgestaltet.

Das Gehäuse 2 des in Fig. 1 dargestellten optischen Analysegeräts 1 ist als Aluminium-Spritzgußteil hergestellt, so daß die in dem Gehäuse 2 vorgesehenen reflektierenden Flächen, die Oberflächen des ersten Reflektors 5, des zweiten Reflektors 7 und des Meßstrahlreflektors 14a, 14b einstückig mit dem Gehäuse ausgeführt sind. Die reflektierenden Flächen sind in dem dargestellten Ausführungsbeispiel durch Metall bedampft und poliert worden. Bei einem anderen ― hier nicht dargestellten ― bevorzugten Ausführungsbeispiel ist das Gehäuse, ausgenommen das strahlungsdurchlässige Gehäuseelement, als Kunststoff-Spritzgußteil ausgeführt, das innen hochreflektierend beschichtet ist.

Zur Vermeidung von Korrosion der in dem Gehäuse 2 angeordneten Elemente des Analysegeräts 1 ist das in Fig. 1 dargestellte gasdichte Gehäuse 2 mit einem Schutzgas gefüllt. Das Schutzgas verhindert weiterhin das Beschlagen der optisch wirksamen Flächen. Im dargestellten Ausfiihrungsbeispiel ist als Schutzgas Stickstoff verwendet worden. Das Gehäuse 2 des optischen Analysegeräts 1 in Fig. 1 ist weiterhin mit einem Gas gefüllt, das einen Teil der Strahlung der Strahlungsquellen 4, 6 absorbiert, womit sich die Meßeigenschaften des Analysegeräts 1 optimieren lassen.

In den bevorzugten Ausführungsbeispielen des erfindungsgemäßen Analysegeräts 1 nach den Fig. 1 und 2 sind der erste Detektor 8 und der zweite Detektor 9 in einem gemeinsamen Detektorgehäuse 18 angeordnet, wobei den Detektoren 8, 9 optische Filter 19, 20 vorgeschaltet sind, die ebenfalls in das Detektorgehäuse 18 integriert sind. In dem in Fig. 1 dargestellten Ausfiihrungsbeispiel sind die optischen Filter 19, 20 schmalbandige Interferenzfilter. Der Durchlaßbereich des ersten Interferenzfilters 19 liegt dabei im Absorptionsbereich des nachzuweisenden Stoffes und der Durchlaßbereich des zweiten optischen Filters 20 ist außerhalb möglicher Absorptionsbereiche vorgesehen, so daß die von ihm durchgelassene Strahlung unbeeinflußt von Absorptionseffekten ist.

Bei den dargestellten optischen Analysegeräten 1 wird die Strahlungsintensität der Strahlungsquellen 4, 6 elektrisch mit unterschiedlichen Frequenzen moduliert. Durch Demodulation der von den Detektoren 8 und 9 erfaßten Signale können die auf die erste Strahlungsquelle 4 und die zweite Strahlungsquelle 6 zurückgehenden korrespondierenden Signalanteile erkannt werden. Aus den vom ersten Detektor 8 und vom zweiten Detektor 9 erfaßten Signalanteilen wird ein Meßwert durch Quotientenbildung generiert. Dieser Meßwert ist ein Maß für die Konzentration des zu detektierenden Stoffes. Dabei hat sich als vorteilhaft herausgestellt, wenn für jeden Detektor 8, 9 der Signalanteil der ersten Strahlungsquelle 4 auf den Anteil der zweiten Strahlungsquelle 6 bezogen wird. Wenn die so gebildeten Quotienten aus den von jedem einzelnen Detektor 8 und 9 erfaßten Signalanteile des Meßstrahls 12 und des Referenzstrahls 13 nochmals aufeinander bezogen werden, so ist der einzige resultierende Gesamtwert frei von systematischen Änderungen in der Strahlungscharakteristik der Strahlungsquellen 4, 6 sowie von Änderungen der Detektor- und Verstärkerempfindlichkeiten.

Bei einem weiteren nicht dargestellten bevorzugten Ausführungsbeispiel eines optischen Analysegeräts sind die optischen Grenzflächen des Absorptionsraumes zur Vermeidung von Kondensation zusätzlich beheizt.

## Patentansprüche

1. Optisches Analysegerät nach dem Prinzip der Strahlungsabsorption mit einem Gehäuse (2) mit mindestens einem strahlungsdurchlässigen Gehäuseelement, mit mindestens einer ersten Strahlungsquelle (4) und einem ihr zugeordneten ersten Reflektor (5) und einer zweiten Strahlungsquelle (6) und einem ihr zugeordneten zweiten Reflektor (7), mit mindestens einem ersten Detektor (8) und einem zweiten Detektor (9) sowie mit einem außerhalb des Gehäuses angeordneten externen Reflektor, wobei die Strahlungsquellen und die Detektoren innerhalb des Gehäuses (2) angeordnet sind, von dem externen Reflektor und dem strahlungsdurchlässigen Gehäuseelement ein Absorptionsraum gebildet wird, ein von der ersten Strahlungsquelle (4) und dem ersten Reflektor (5) emittierter Meßstrahl nach Reflexion an dem externen Reflektor wieder in das Gehäuse eintritt, von der zweiten Strahlungsquelle (6) und dem zweiten Reflektor (7) ein Referenzstarahl (13) emittiert wird und der Referenzstrahl (13) von der zweiten Strahlungsquelle (6) und dem zweiten Reflektor (7) auf den ersten Detektor (8) und den zweiten Detektor (9) fällt, **dadurch gekennzeichnet, daß** der Meßstrahl (12) von einem in dem Gehäuse (2) angeordneten Meßstrahlreflektor (14a, 14b) nach Durchlaufen des Absorptionsraumes (11) direkt auf den ersten Detektor (8) und den zweiten Detektor (9) gelenkt wird und der Referenzstrahl (13) von der zweiten Strahlungsquelle (6) und dem zweiten Reflektor 7 direkt auf den ersten Detektor (8) und den zweiten Detektor (9) fällt.

2. Optisches Analysegerät nach Anspruch 2, **dadurch gekennzeichnet, daß** der Meßstrahlreflektor (14a, 14b) ringförmig ausgebildet ist, insbesondere als Segment eines Paraboloids oder einer Kugelschale.

3. Optisches Analysegerät nach einem der Ansprüche 1 oder 2, **dadurch gekennzeichnet, daß** die Oberfläche des Meßstrahlreflektors (14a, 14b) strahlmischend und strahlhomogenisierend ausgebildet ist, insbesondere durch konkave und/oder konvexe Mikrostrukurierung (156) der Oberfläche, so daß im wesentlichen von jedem Bereich des Meßstrahlreflektors (14a, 14b) reflektierte Meßstrahlen (12) auf die Detektoren (8, 9) verteilt werden.

4. Optisches Analysegerät nach einem der Ansprüche 1 bis 3, **dadurch gekennzeichnet, daß** der Abstand A des externen Reflektors (5) von dem Gehäuse (2) einstellbar ist.

5. Optisches Analysegerät nach einem der Ansprüche 1 bis 4, **dadurch gekennzeichnet, daß** der Strahlengang des Meßstrahls (12) einstellbar ist.

6. Optisches Analysegerät nach Anspruch 5, **dadurch gekennzeichnet, daß** die Einstellung des Strahlengangs des Meßstrahls (12) durch Verschieben der ersten Strahlungsquelle (4) gegenüber dem ersten Reflektor (5) erfolgt, insbesondere durch Verschieben der ersten Strahlungsquelle (4) entlang der optischen Achse des ersten Reflektors (5).

7. Optisches Analysegerät nach einem der Ansprüche 1 bis 6, **dadurch gekennzeichnet, daß** die im Gehäuse (2) vorgesehenen reflektierenden Flächen oberflächenbehandelt sind, insbesondere durch Galvanisieren, Bedampfen, Plasmabeschichtung und/oder Polieren.

8. Optisches Analysegerät nach einem der Ansprüche 1 bis 7, **dadurch gekennzeichnet, daß** die in dem Gehäuse (2) vorgesehenen reflektierenden Flächen, insbesondere die Oberflächen des ersten Reflektors (5), des zweiten Reflektors (7) und des Meßstrahlreflektors (14a, 14b), einstückig mit dem Gehäuse (2) ausgeführt sind, wobei das Gehäuse (2) insbesondere als Spritz-, Spritzguß- oder Gießteil gefertigt ist.

9. Optisches Analysegerät nach einem der Ansprüche 1 bis 8, **dadurch gekennzeichnet, daß** das Gehäuse (2) mit einem Schutzgas gefüllt ist.

10. Optisches Analysegerät nach einem der Ansprüche 1 bis 9, **dadurch gekennzeichnet, daß** das Gehäuse (2) mit einem Gas gefüllt ist, das einen Teil der Strahlung der Strahlungsquellen (4, 6) absorbiert.

11. Optisches Analysegerät nach einem der Ansprüche 1 bis 10, **dadurch gekennzeichnet, daß** der erste Detektor (8) und der zweite Detektor (9) - insbesondere pyroelektrische Detektoren oder Thermosäulen-Detektoren - in einem gemeinsamen Detektorgehäuse angeordnet sind, insbesondere zusammen mit den Detektoren (8, 9) vorgeschalteten optischen Filtern (19, 20).

12. Optisches Analysegerät nach Anspruch 11, **dadurch gekennzeichnet, daß** als optische Filter (19, 20) schmalbandige Interferenzfilter verwendet werden, deren Durchlaßbereich insbesondere im Absorptionsbereich des nachzuweisenden Stoffes liegt.

13. Optisches Analysegerät nach einem der Ansprüche 1 bis 12, **dadurch gekennzeichnet, daß** die optischen Grenzflächen des Absorptionsraumes (11) zur Vermeidung von Kondensation beheizt sind.

## Claims

1. Radiation absorption optical analysis device, comprising a housing (2) with at least one radiation-permeable housing element, at least a first radiation source (4) having a first reflector (5) assigned to it, a second radiation source (6) having a second reflector (7) assigned to it, at least a first detector (8) and a second detector (9) as well as an external reflector located outside the housing, wherein the radiation sources and reflectors are arranged in the housing (2), an absorption space formed by the external reflector and the radiation-permeable housing element, and a measurement beam emitted by the first radiation source (4) and the first reflector (5) returns to the housing again after being reflected by the external reflector, a reference beam (13) emitted from the second radiation source (6) and the second reflector (7) and the reference beam (13) from the second radiation source (6) and the second reflector (7) falls onto the first detector (8) and the second detector (9) **characterized in that** the measurement beams (12), after passing through the absorption space (11), are directed directly onto the first detector (8) and the second detector (9) by a measurement beam reflector (14a, 14b) in the housing (2) and the reference beams (13) from the second radiation source (6) and the second reflector (7) fall directly onto the first detector (8) and the second detector (9).

2. Optical analysis device according to claim 1, **characterized in that** the measurement beam reflector (14a, 14b) is annular, in particular as a segment of a paraboloid or spherical shell.

3. Optical analysis device according to any one of claims 1 or 2, **characterized in that** the measurement beam reflector has a surface that is configured to mix and homogenize the measurement beams, in particular using concave and convex microstructuring (15b) of the surface, so that basically measurement beams (12) reflected from each region of the measurement beam reflector (14a, 14b) are distributes to the detectors (8, 9).

4. Optical analysis device according to any one of claims 1 to 3, **characterized in that** the distance A of the external reflector (5) from the housing (2) is adjustable.

5. Optical analysis device according to any one of claims 1 to 4, **characterized in that** the beam path of the measurement beams (12) is adjustable.

6. Optical analysis device according to claim 5, **characterized in that** the beam path of the measurement beam (12) is adjusted by shifting the first radiation source (4) relative to the first detector (5), in particular by shifting the first radiation source (4) along the optical axis of the first reflector (5).

7. Optical analysis device according to any one of claims 1 to 6, **characterized in that** surfaces of the reflectors in the housing have been surface-treated in particular by galvanization, vapor coating, plasma coating and/or polishing.

8. Optical analysis device according to any one of claims 1 to 7, **characterized in that** the reflecting surfaces provided in the housing, in particular the surfaces of the first reflector (5), the second reflector (7) and the measurement beam reflector (14a, 14b) are integral portions of the housing, wherein the housing is one of an injection molded part and a cast part.

9. Optical analysis device according to any one of claims 1 to 8, **characterized in that** the housing (2) is filled with a protective gas.

10. Optical analysis device according to any one of claims 1 to 9, **characterized in that** the housing (2) is filled with a gas, which is able to absorb part of the radiation of the radiation sources (4, 6).

11. Optical analysis device according to any one of claims 1 to 10, **characterized in that** the first detector (8) and the second detector (9) - in particular pyroelectric detectors or thermopile detectors - are located in a common detector housing, in particular together with optical filters (19, 20) being connected upstream from the detectors (8, 9).

12. Optical analysis device according to claim 11, **characterized in that** the optical filters are narrowband interference filters with a transmission range which lies in an absorption region of the substance to be detected.

13. Optical analysis device according to any one of claims 1 to 12, **characterized in that** optical interfaces of the absorption space are heated to avoid condensation.

## Revendications

1. Appareil d'analyse optique selon le principe de l'absorption du rayonnement, comprenant un boîtier (2) avec au moins un élément de boîtier laissant passer le rayonnement, comprenant au moins une première source de rayonnement (4) et un premier réflecteur (5) qui lui est associé ainsi qu'une deuxième source de rayonnement (6) et un deuxième réflecteur (7) qui lui est associé, comprenant au moins un premier détecteur (8) et un deuxième détecteur (9) ainsi qu'un réflecteur externe disposé à l'extérieur du boîtier, les sources de rayonnement et les détecteurs étant disposés à l'intérieur du boîtier (2), un espace d'absorption étant formé par le réflecteur externe et l'élément de boîtier laissant passer le rayonnement, un rayon de mesure émis par la première source de rayonnement (4) et le premier réflecteur (5) pénétrant de nouveau dans le boîtier après réflexion sur le réflecteur externe, un rayon de référence (13) étant émis par la deuxième source de rayonnement (6) et le deuxième réflecteur (7) et le rayon de référence (13) de la deuxième source de rayonnement (6) et du deuxième réflecteur (7) venant frapper le premier détecteur (8) et le deuxième détecteur (9), **caractérisé en ce que** le rayon de mesure (12) est dévié directement sur le premier détecteur (8) et le deuxième détecteur (9) par un réflecteur de rayon de mesure (14a, 14b) disposé dans le boîtier (2) après avoir traversé l'espace d'absorption (11) et le rayon de référence (13) de la deuxième source de rayonnement (6) et du deuxième réflecteur (7) vient frapper directement le premier détecteur (8) et le deuxième détecteur (9).

2. Appareil d'analyse optique selon la revendication 2, **caractérisé en ce que** le réflecteur de rayon de mesure (14a, 14b) est configuré en forme d'anneau, notamment sous la forme d'un segment d'une parabole ou d'une coque sphérique.

3. Appareil d'analyse optique selon l'une des revendications 1 ou 2, **caractérisé en ce que** la surface du réflecteur de rayon de mesure (14a, 14b) est configurée de manière à mélanger les rayons et à homogénéiser les rayons, notamment par une microstructuration (15b) concave et/ou convexe de la surface, de sorte que les rayons de mesure (12) réfléchis pour l'essentiel par chaque zone du réflecteur de rayon de mesure (14a, 14b) soient distribués sur les détecteurs (8, 9).

4. Appareil d'analyse optique selon l'une des revendications 1 à 3, **caractérisé en ce que** l'écart A entre le réflecteur externe (5) et le boîtier (2) est réglable.

5. Appareil d'analyse optique selon l'une des revendications 1 à 4, **caractérisé en ce que** le trajet du rayon de mesure (12) est réglable.

6. Appareil d'analyse optique selon la revendication 5, **caractérisé en ce que** le réglage du trajet du rayon de mesure (12) s'effectue en décalant la première source de rayonnement (4) par rapport au premier réflecteur (5), notamment en décalant la première source de rayonnement (4) le long de l'axe optique du premier réflecteur (5).

7. Appareil d'analyse optique selon l'une des revendications 1 à 6, **caractérisé en ce que** les surfaces réfléchissantes prévues dans le boîtier (2) sont traitées, notamment par galvanisation, métallisation sous vide, revêtement au plasma et/ou polissage.

8. Appareil d'analyse optique, selon l'une des revendications 1 à 7, **caractérisé en ce que** les surfaces réfléchissantes prévues dans le boîtier (2), notamment les surfaces du premier réflecteur (5), du deuxième réflecteur (7) et du réflecteur de rayon de mesure (14a, 14b) sont réalisées d'une seule pièce avec le boîtier (2), le boîtier (2) étant notamment fabriqué sous la forme d'une pièce injectée, moulée par injection ou moulée.

9. Appareil d'analyse optique selon l'une des revendications 1 à 8, **caractérisé en ce que** le boîtier (2) est rempli d'un gaz protecteur.

10. Appareil d'analyse optique selon l'une des revendications 1 à 9, **caractérisé en ce que** le boîtier (2) est rempli d'un gaz qui adsorbe une partie du rayonnement des sources de rayonnement (4, 6).

11. Appareil d'analyse optique selon l'une des revendications 1 à 10, **caractérisé en ce que** le premier détecteur (8) et le deuxième détecteur (9) sont notamment des détecteurs pyroélectriques ou des détecteurs à thermopile qui sont disposés dans un boîtier de détecteur commun, notamment conjointement avec des filtres optiques (19, 20) montés avant les détecteurs (8, 9).

12. Appareil d'analyse optique selon la revendication 11, **caractérisé en ce que** les filtres optiques (19, 20) utilisés sont des filtres à interférence à bande étroite dont la plage de passage se trouve notamment dans la plage d'absorption de la substance à détecter.

13. Appareil d'analyse optique selon l'une des revendications 1 à 12, **caractérisé en ce que** les surfaces de délimitation optiques de l'espace d'absorption (11) sont chauffées pour éviter la condensation.
